# EUROPEAN PATENT SPECIFICATION

(11) **EP 2 778 839 B1**
(45) Date of publication and mention of the grant of the patent: **05.10.2016**
(21) Application number: 14158664.4
(22) Date of filing: 10.03.2014
(51) Int. Cl.: G06F 1/32

(54) **Method, apparatus, system for hybrid lane stalling or no-lock bus architectures**
Verfahren, Vorrichtung, System für hybrides Spurstoppen oder No-lock-Busarchitekturen
Procédé, appareil, système de perte de voie hybride ou architectures de bus sans verrouillage

(30) Priority: 15.03.2013 US 201313835176
(43) Date of publication of application: 17.09.2014
(73) Proprietor: Intel Corporation, Santa Clara, CA 95054 (US)
(72) Inventor: Ebert, Gregory L, Portland, OR Oregon 97229 (US)
(74) Representative: Jennings, Vincent Louis

(56) References cited:
- US-A1- 2007 150 762
- US-A1- 2008 077 814
- US-A1- 2011 173 352

## Description

### FIELD

This disclosure pertains to computing systems, and in particular (but not exclusively) to interconnects.

### BRIEF DESCRIPTION OF THE DRAWINGS

FIG. 1 illustrates an embodiment of a computing system including a multicore processor.
FIG. 2A, B illustrate an embodiment of unidirectional data bus with multiple lanes.
FIG. 3A, B illustrate an embodiment of hybrid lane stalling bus.
FIG. 4A, B illustrate an embodiment of dual simplex data link.
FIG. 5A, B, C illustrate an embodiment of no-lock bus with multiple bit redundancy and sample with voting.
FIG. 6 illustrates an embodiment of a method of hybrid lane stalling to recover clock from master lane.
FIG. 7 illustrates an embodiment of a no-lock bus method to use multiple bit redundancy and to sample with voting to determine correct logic state.

### DETAILED DESCRIPTION

In the following description, numerous specific details are set forth, such as examples of specific types of processors and system configurations, specific hardware structures, specific architectural and micro architectural details, specific register configurations, specific instruction types, specific system components, specific measurements/heights, specific processor pipeline stages, and operation, etc., in order to provide a thorough understanding of the present invention. It will be apparent, however, to one skilled in the art that these specific details need not be employed to practice the present invention. In other instances, well known components or methods, such as specific and alternative processor architectures, specific logic circuits/code for described algorithms, specific firmware code, specific interconnect operation, specific logic configurations, specific manufacturing techniques and materials, specific compiler implementations, specific expression of algorithms in code, specific power down and gating techniques/logic, and other specific operational details of computer system have not been described in detail in order to avoid unnecessarily obscuring the present invention.

Although the following embodiments may be described with reference to energy conservation and energy efficiency in specific integrated circuits, such as in computing platforms or microprocessors, other embodiments are applicable to other types of integrated circuits and logic devices. Similar techniques and teachings of embodiments described herein may be applied to other types of circuits or semiconductor devices that may also benefit from better energy efficiency and energy conservation. For example, the disclosed embodiments are not limited to desktop computer systems or Ultrabooks™ and may also be used in other devices, such as handheld device, tablet, other thin notebook, system on a chip (SOC) device, and embedded application. Some examples of handheld devices include cellular phone, Internet protocol device, digital camera, personal digital assistant (PDA), and handheld PC. Embedded application typically includes a microcontroller, a digital signal processor (DSP), SOC, network computer (NetPC), set-top box, network hub, wide area network (WAN) switch, or any other system that can perform the functions and operations taught below. Moreover, methods, apparatuses, and systems described herein are not limited to physical computing devices, but may also relate to software optimizations for energy conservation and efficiency. As will become readily apparent in the description below, the embodiments of methods, apparatuses, and systems described herein (whether in reference to hardware, firmware, software, or a combination thereof) are vital to a 'green technology' future balanced with performance considerations.

As computing systems are advancing, the components therein are becoming more complex. As a result, the interconnect architecture to couple and communicate between the components is also increasing in complexity to ensure bandwidth requirements are met for optimal component operation. Furthermore, different market segments demand different aspects of interconnect architectures to suit the market's needs. For example, servers require higher performance, while the mobile ecosystem is sometimes able to sacrifice overall performance for power savings. Yet, it is a singular purpose of most fabrics to provide highest possible performance with maximum power saving. Below, a number of interconnects are discussed, which would potentially benefit from aspects of the invention described herein.

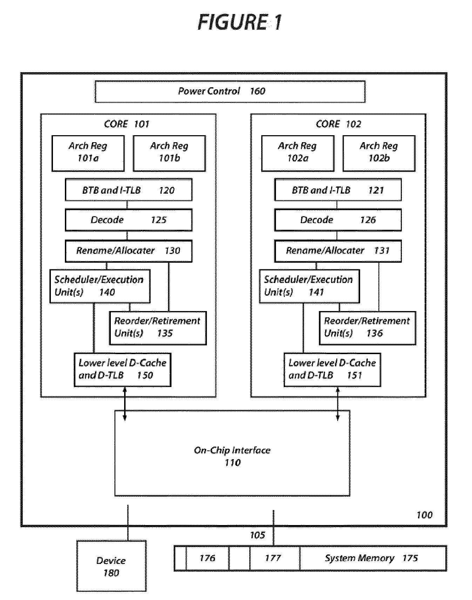

Referring to FIG. 1, an embodiment of a block diagram for a computing system including a multicore processor is depicted. Processor 100 includes any processor or processing device, such as a microprocessor, embedded processor, digital signal processor (DSP), network processor, handheld processor, application processor, co-processor, SOC, or other device to execute code. Processor 100, in one embodiment, includes at least two cores-core 101 and 102, which may include asymmetric cores or symmetric cores (the illustrated embodiment). However, processor 100 may include any number of processing element that may be symmetric or asymmetric.

In one embodiment, a processing element refers to hardware or logic to support a software thread. Examples of hardware processing elements include: a thread unit, thread slot, thread, process unit, context, context unit, logical processor, hardware thread, core, and/or any other element, to hold a state for a processor, such as an execution state or architectural state. In other words, a processing element, in one embodiment, refers to any hardware to be independently associated with code, such as a software thread, operating system, application, or other code. A physical processor (or processor socket) typically refers to an integrated circuit, which potentially includes any number of other processing elements, such as cores or hardware threads.

A core often refers to logic located on an integrated circuit to maintain an independent architectural state with each independently maintained architectural state associated with at least some dedicated execution resources. In contrast to cores, a hardware thread typically refers to any logic located on an integrated circuit to maintain an independent architectural state with the independently maintained architectural states to share access to execution resources. As can be seen, when certain resources are shared and others are dedicated to an architectural state, the nomenclatures of hardware thread and core overlap. Yet often, a core and a hardware thread are viewed by an operating system as individual logical processors with the operating system able to individually schedule operations on each logical processor.

Physical processor **100,** as illustrated in FIG. 1, includes two cores-core **101** and **102.** Here, core **101** and **102** are considered symmetric cores, i.e. cores with the same configurations, functional units, and/or logic. In another embodiment, core **101** includes an out-of-order processor core, while core **102** includes an in-order processor core. However, cores **101** and **102** may be individually selected from any type of core, such as a native core, software managed core, core adapted to execute a native Instruction Set Architecture (ISA), core adapted to execute a translated ISA, co-designed core, or other known core. In a heterogeneous core environment (i.e., asymmetric cores), some form of translation, such a binary translation, may be utilized to schedule or execute code on one or both cores. Yet to further the discussion, the functional units illustrated in core **101** are described in further detail below, as the units in core 102 operate in a similar manner in the depicted embodiment.

As depicted, core **101** includes two hardware threads **101a** and **101b,** which may also be referred to as hardware thread slots **101a** and **101b.** Therefore, software entities, such as an operating system, in one embodiment potentially view processor **100** as four separate processors, i.e., four logical processors or processing elements capable of executing four software threads concurrently. As alluded to above, a first thread is associated with architecture state registers **101a,** a second thread is associated with architecture state registers **101b,** a third thread may be associated with architecture state registers **102a,** and a fourth thread may be associated with architecture state registers **102b.** Here, each of the architecture state registers **(101a, 101b, 102a,** and **102b**) may be referred to as processing elements, thread slots, or thread units, as described above. As illustrated, architecture state registers **101a** are replicated in architecture state registers **101b,** so individual architecture states/contexts are capable of being stored for logical processor **101a** and logical processor **101b.** In core **101,** other smaller resources, such as instruction pointers and renaming logic in allocator and renamer block **130** may also be replicated for threads **101a** and **101b.** Some resources, such as re-order buffers in reorder/retirement unit **135,** instruction translation lookaside buffer (I-TLB) **120,** load/store buffers, and queues may be shared through partitioning. Other resources, such as general purpose internal registers, page-table base register(s), low-level data-cache and data-translation lookaside buffer (D-TLB) **115,** execution unit(s) **140,** and portions of out-of-order unit 135 are potentially fully shared.

Processor **100** often includes other resources, which may be fully shared, shared through partitioning, or dedicated by/to processing elements. In FIG. 1, an embodiment of a purely exemplary processor with illustrative logical units/resources of a processor is illustrated. Note that a processor may include, or omit, any of these functional units, as well as include any other known functional unit, logic, or firmware not depicted. As illustrated, core **101** includes a simplified, representative out-of-order (OOO) processor core. But an in-order processor may be utilized in different embodiments. The OOO core includes a branch target buffer **120** to predict branches to be executed/taken and an I-TLB **120** to store address translation entries for instructions.

Core **101** further includes decode module **125** coupled to fetch unit **120** to decode fetched elements. Fetch logic, in one embodiment, includes individual sequencers associated with thread slots **101a, 101b,** respectively. Usually core **101** is associated with a first ISA, which defines/specifies instructions executable on processor **100.** Often machine code instructions that are part of the first ISA include a portion of the instruction (referred to as an opcode), which references/specifies an instruction or operation to be performed. Decode logic **125** includes circuitry that recognizes these instructions from their opcodes and passes on the decoded instructions in the pipeline for processing as defined by the first ISA. For example, as discussed in more detail below, decoders **125,** in one embodiment, include logic designed to recognize specific instructions, such as transactional instruction. As a result of the recognition by decoders **125,** the architecture or core **101** takes specific, predefined actions to perform tasks associated with the appropriate instruction. It is important to note that any task, block, operation, and method described herein may be performed in response to a single or multiple instructions; some of which may be new or old instructions. Note decoders **126,** in one embodiment; recognize the same ISA (or a subset thereof). Alternatively, in a heterogeneous core environment, decoders 126 recognize a second ISA (either a subset of the first ISA or a distinct ISA).

In one example, allocator and renamer block **130** includes an allocator to reserve resources, such as register files to store instruction processing results. However, threads **101a** and **101b** are potentially capable of out-of-order execution, where allocator and renamer block **130** also reserves other resources, such as reorder buffers to track instruction results. Unit **130** may also include a register renamer to rename program/instruction reference registers to other registers internal to processor **100.** Reorder/retirement unit **135** includes components, such as the reorder buffers mentioned above, load buffers, and store buffers, to support out-of-order execution, and later in-order retirement of instructions executed out-of-order.

Scheduler and execution unit(s) block **140,** in one embodiment, includes a scheduler unit to schedule instructions/operation on execution units. For example, a floating point instruction is scheduled on a port of an execution unit that has an available floating point execution unit. Register files associated with the execution units are also included to store information instruction processing results. Exemplary execution units include a floating point execution unit, integer execution unit, jump execution unit, load execution unit, store execution unit, and other known execution units.

Lower level data cache and data translation buffer (D-TLB) **150** are coupled to execution unit(s) **140.** The data cache is to store recently used/operated on elements, such as data operands, which are potentially held in memory coherency states. The D-TLB is to store recent virtual/linear to physical address translations. As a specific example, a processor may include a page table structure to break physical memory into a plurality of virtual pages.

Here, cores **101** and **102** share access to higher-level or further-out cache, such as a second level cache associated with on-chip interface **110.** Note that higher-level or further-out refers to cache levels increasing or getting further way from the execution unit(s). In one embodiment, higher-level cache is a last-level data cache-last cache in the memory hierarchy on processor **100**-such as a second or third level data cache. However, higher level cache is not so limited and may be associated with, or include, an instruction cache. A trace cache-a type of instruction cache-instead may be coupled after decoder **125** to store recently decoded traces. Here, an instruction potentially refers to a macro-instruction (i.e. a general instruction recognized by the decoders), which may decode into a number of micro-instructions (micro-operations).

In the depicted configuration, processor **100** also includes on-chip interface module **110.** Historically, a memory controller, which is described in more detail below, has been included in a computing system external to processor **100.** In this scenario, on-chip interface **110** is to communicate with devices external to processor **100,** such as system memory **175,** chipset (often including a memory controller hub to connect to memory **175** and an I/O controller hub to connect peripheral devices), memory controller hub, northbridge, or other integrated circuit. And in this scenario, bus 105 may include any known interconnect, such as multi-drop bus, point-to-point interconnect, serial interconnect, parallel bus, coherent (e.g., cache coherent) bus, layered protocol architecture, differential bus, and Gunning transceiver logic (GTL) bus.

Memory 175 may be dedicated to processor **100** or shared with other devices in a system. Common examples of types of memory **175** include DRAM, SRAM, non-volatile memory (NVM), and other known storage devices. Note that device 180 may include a graphic accelerator, processor or card coupled to a memory controller hub, data storage coupled to an I/O controller hub, a wireless transceiver, a flash device, an audio controller, a network controller, or other known device.

Recently however, as more logic and devices are being integrated on a single die, such as SOC, each of these devices may be incorporated on processor **100.** For example in one embodiment, a memory controller hub is on the same package and/or die with processor **100.** Here, a portion of the core (an on-core portion) **110** includes one or more controller(s) to interface with other devices such as memory **175** or a graphics device **180.** The configuration including an interconnect and controllers to interface with such devices is often referred to as an on-core (or un-core configuration). As an example, on-chip interface **110** includes a ring interconnect for on-chip communication and a high-speed serial point-to-point link **105** for off-chip communication. Yet, in the SOC environment, even more devices, such as the network interface, co-processor, memory **175,** graphics processor **180,** and any other known computer devices/interface may be integrated on a single die or integrated circuit to provide small form factor with high functionality and low power consumption.

In one embodiment, processor **100** may execute a compiler, optimization, and/or translator code **177** to compile, translate, and/or optimize application code **176** to support the apparatus and methods described herein or to interface therewith. A compiler often includes a program or set of programs to translate source text/code into target text/code. Usually, compilation of program/application code with a compiler may be performed in multiple phases and passes to transform high-level programming language code into low-level machine or assembly language code. Yet, single pass compilers may be utilized for simple compilation. A compiler may utilize any known compilation technique and perform any known compiler operation, such as lexical analysis, preprocessing, parsing, semantic analysis, code generation, code transformation, and code optimization.

Larger compilers often include multiple phases, but most often these phases are included within two general phases: (1) a front-end, i.e., generally where syntactic processing, semantic processing, and some transformation/optimization may take place, and (2) a back-end, i.e., generally where analysis, transformation, optimization, and code generation may take place. Some compilers refer to a middle, which illustrates the blurring of delineation between a front-end and back end of a compiler. As a result, reference to insertion, association, generation, or other operation of a compiler may take place in any aforementioned phase or pass, as well as any other known phase or pass of a compiler. As an illustrative example, a compiler potentially may insert operations, calls, functions, etc. in one or more phases of compilation, such as insertion of calls/operations in a front-end phase of compilation and then transformation of the calls/operations into lower-level code during a transformation phase. Note that during dynamic compilation, compiler code or dynamic optimization code may insert such operations/calls, as well as optimize the code for execution during runtime. As a specific illustrative example, binary code (already compiled code) may be dynamically optimized during runtime. Here, the program code may include the dynamic optimization code, the binary code, or a combination thereof.

A translator, such as a binary translator, may translate code either statically or dynamically to optimize and/or translate code. Therefore, reference to execution of code, application code, program code, or other software environment may refer to: (1) execution of a compiler program(s), optimization code optimizer, or translator either dynamically or statically, to compile program code, maintain software structures, perform other operations, optimize code, or translate code; (2) execution of main program code including operations/calls, such as application code that has been optimized/compiled; (3) execution of other program code, such as libraries, associated with the main program code to maintain software structures, to perform other software related operations, or to optimize code; or (4) a combination thereof.

Note that the apparatuses, methods, and systems described above may be implemented in any electronic device or system as aforementioned. As specific illustrations, the figures below provide exemplary systems for utilizing the invention as described herein. As the systems below are described in more detail, a number of different interconnects are disclosed, described, and revisited from the discussion above. And as is readily apparent, the advances described above may be applied to any of those interconnects, fabrics, or architectures.

One interconnect fabric architecture includes Peripheral Component Interconnect (PCI) Express (PCIe) to enable components and devices from different vendors to inter-operate in an open architecture and to span multiple market segments: clients (desktops and mobile), servers (standard and enterprise), and embedded and communication devices. PCI Express is a high performance, general purpose I/O interconnect defined for a wide variety of future computing and communication platforms. Some PCI attributes, such as its usage model, load-store architecture, and software interfaces, have been maintained through its revisions, whereas previous parallel bus implementations have been replaced by a highly scalable, fully serial interface. The more recent versions of PCI Express use advances in point-to-point interconnects, switch-based technology, and packetized protocol to deliver new levels of performance and features. Power management, Quality of Service (QoS), hot-plug/hot-swap support, data integrity, and error handling are among some advanced features supported by PCI Express.

In one embodiment, a High Performance Interconnect (HPI) is provided. HPI is a next-generation cache-coherent, link-based interconnect. As one example, HPI may be utilized in high performance computing platforms, such as workstations or servers, where PCIe is typically used to connect accelerators or I/O devices. However, HPI is not so limited. Instead, HPI may be utilized in any system or platform described herein. Furthermore, the individual ideas developed may be applied to other interconnects, such as PCIe. Moreover, HPI may be extended to compete in the same market as other interconnect, such as PCIe. To support multiple devices, in one implementation, HPI includes ISA-agnostic (i.e., HPI is able to be implemented in multiple different devices). In another scenario, HPI may also be utilized to connect high performance I/O devices, not just processors or accelerators. For example, a high performance PCIe device may be coupled to HPI through an appropriate translation bridge (i.e., HPI to PCIe). Moreover, the HPI links may be utilized by many HPI based devices, such as processors, in various ways (e.g., stars, rings, meshes, etc.).

The HPI architecture includes definition of a layered protocol architecture, which is similar to PCIe in that it also includes a layered protocol architecture. In one embodiment, HPI defines protocol layers (coherent, non-coherent, and, optionally, other memory-based protocols), routing layer, link layer, and physical layer. Furthermore, as many other interconnect architecture's HPI includes enhancements related to power managers, design for test (DFT) and debug, fault handling, registers, security, etc.

In a serial communication link, the data are sent or transmitted sequentially from point-to-point, such as in a single stream, such as one bit at a time, either in one direction, such as forward or reverse direction, or in both directions, such as forward and reverse directions.

Using fewer cables (wires or fibers) in the serial data link, compared to a parallel data link, will reduce I/O pin count, physical footprint, and cost. To compensate, the serial link generally has a higher data transfer rate than in the parallel link. Thus, a high-speed serial data link or data bus in a device, core, processor, chip, computer, or system may need to balance between flexibility (extensibility) and latency (overhead).

Depending on priority of various metrics in a particular application, various embodiments of the serial data link or bus architecture may be specified to handle clock and data recovery (CDR). Other embodiments of the serial data link or bus architectures may handle CDR in response to input from a user.

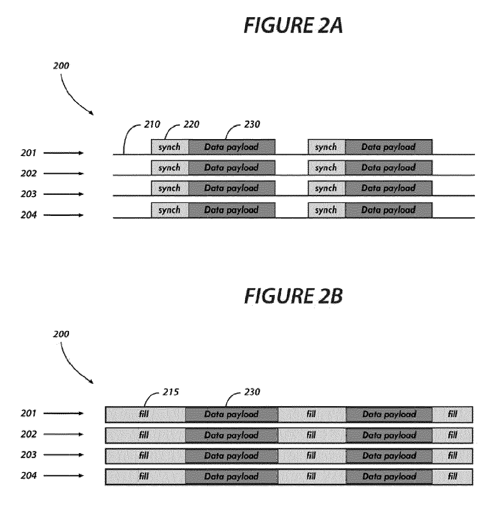

A burst-and-stall data link or bus **200** architecture is shown in FIG. **2A**. The example includes a unidirectional data link or bus **200** with multiple, such as 4, data lanes **201, 202, 203, 204.** When no data need to be sent, the bus **200** may stall and go to sleep **210.** When new data are to be sent or transmitted **230,** the bus **200** needs to wake up first and to synchronize **220.** Thus, performance is reduced since extra time and power are expended. Furthermore, the signal for synchronization may become a source of electromagnetic interference (EMI) so mitigation of EMI may require additional shielding.

A fill data link or bus **200** architecture is shown in FIG. **2B****.** The example includes a unidirectional data link or bus **200** with multiple, such as 4, data lanes **201,202, 203, 204.** Even when no data need to be sent, the bus fills **215** as required. Since it is in a logical idle state, the bus transmits meaningless data symbols. However, the bus **200** becomes available very quickly whenever new data are to be transmitted **230** so less time and power are wasted. However, staying active by filling **215** during the interim or intervening time wastes power and may be a source of EMI since the signal for fill is not productive.

US 2008/077814 discloses a method of powering down a Tx/Rx link during periods of inactivity, with each link comprisingcomprising 20 Tx/Rx pairs. Paragraph [0105] of US 2008/077814 describes how the electrical modules of the two communication agents enter a low-powered state (L0s) when the transaction queue is empty, i.e. no incoming data stream.

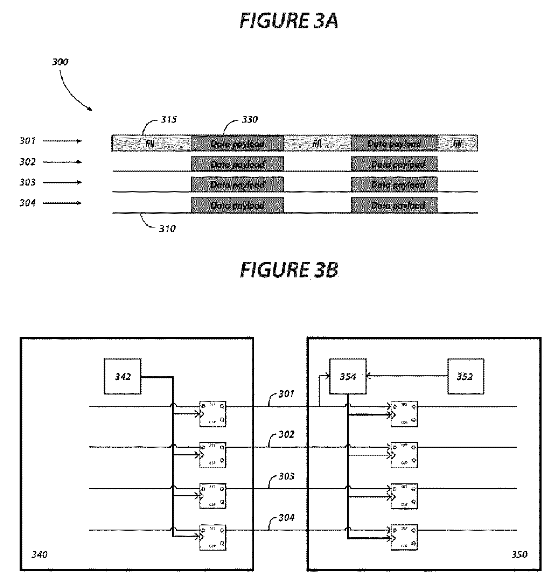

Performance and power vectors may be balanced during periods of inactivity by using an embodiment of apparatus, method, system for a hybrid lane stalling (HLS) data link or bus **300** architecture as shown in FIG. **3A**. The example includes a data link or bus **300** with multiple, such as 4, data lanes **301, 302, 303, 304.** The data bus **300** may be unidirectional. One data lane may be assigned or selected to serve as a master lane **301.** When no data need to be sent, for a given direction, all lanes, except the master lane, are shut down or stalled **310.** The master lane **301** fills **315** to keep the data sink active and synchronized to the data source. Thus, whenever new data are to be transmitted **330,** the sink needs not to wake and to synchronize since it is still locked to the master lane **301.** Furthermore, completely turning off or stalling **310** the non-master lanes **302, 303, 304** during the interim or intervening time reduces power consumption. EMI is also minimized because fewer data lanes are signaling unnecessarily and synchronization signals are not required.

Both EMI and radio frequency interference (RFI) decrease proportionally to the number of lanes that are turned off or the percentage of time that the lanes are quiet. A duty cycle is a ratio of "on" time to total "on"/"off" time. For example, if a 4-lane bus **300** uses hybrid lane stalling data link or bus **300** architecture (with no change in duty cycle), interference decreases about 6 decibels (dB).

An embodiment of a basic clocking architecture that may be used for a hybrid lane stalling data link or bus **300** architecture is shown in FIG. **3B****.** The transmitter **340** includes a first data-rate phase-locked loop (PLL) **342** to lock the clock recovery for all non-master lanes **302, 303, 304** to a master lane **301.** A delay (D) flip-flop may be included for each non-master lane. Thus, a signal may appear at an output of a circuit delayed by the duration (time) of one clock pulse.

The clock for all lanes is maintained as long as the master lane **301** remains active. The receiver **350** includes a second data-rate PLL **352** for clock and data recovery (CDR) **354.**

The clock signal is a signal with a periodic waveform. The signal oscillates between a low state and a high state. A clock generator may produce a clock signal, such as a square wave with a 50% duty cycle with a specified frequency. Frequency is a derivative of phase with respect to time. Circuits that use the clock signal for synchronization of different portions of the circuit may become active at the rising edge and/or falling edge of the clock cycle.

The clock reference should have high quality, such as low noise. Crosstalk and interference should also be minimized at a board level.

Clock signals may also use sine waves. Sine wave clocks may use differential signals. Differential signals may transmit information with two complementary signals sent on two paired wires, such as a differential pair. Resistance to EMI is improved since external interference will tend to affect both wires. For a given supply voltage, differential signaling provides twice the noise immunity of a single-ended signaling system. Differential signals may be transmitted on balanced lines (with equal impedances) to improve resistance to EMI.

The PLL is a control system which generates an output signal with a phase that is related to a phase of an input reference signal. The PLL includes an electronic circuit with a variable-frequency oscillator and a phase detector. The circuit compares the phase of the input signal with the phase of the signals derived from its output oscillator and adjusts frequency of its oscillator to keep the two phases matched. The signal from the phase detector is used to control the oscillator in a feedback loop.

The PLL may be implemented in hardware, such as by using integrated circuits. The PLL may also be implemented in software. Software implementation has advantages such as easy customization of the feedback loop.

In an embodiment, the receiver includes one or more delay-locked loops (DLL) to adjust a static phase alignment for one or more non-master lanes **302, 303, 304.** The DLL has an internal voltage-controlled crystal oscillator. In essence, the DLL places a negative-delay gate in a clock path of a digital circuit. The DLL may be used to change the phase of a clock signal, such as in CDR.

In another embodiment, the receiver includes one or more delay lines to adjust a static phase alignment for one or more non-master lanes **302, 303, 304.**

In still another embodiment, the receiver includes one or more phase interpolators (PI) to adjust a static phase alignment for one or more non-master lanes **302, 303, 304.** The phase interpolator allows the receiver to adjust the phase of its sampling clocks in a specified increment. The phase interpolator may produce an output clock with a coarse or fine phase shift relative to an input clock.

In an embodiment, the phase interpolator may be voltage-controlled. The voltage-controlled phase interpolator may be smaller in area and may consume less power.

In another embodiment, the phase interpolator may be current-controlled. The current-controlled phase interpolator may be more linear and may be easier to control since it takes digital inputs rather than analog inputs.

Many delay gates may be connected front-to-back. The input of the delay chain may be connected to the clock that is to be negatively delayed. A multiplexer may be connected to each stage of the delay chain to combine the separate effects. The delay of an element may vary if the actual load changes. A control circuit may update a selector of the multiplexer to produce the negative delay effect. The output may be the resulting negatively-delayed clock signal. The phase shift may be specified relative to the delay chain gate units and/or relative to a clock period.

In some embodiments, the hybrid lane stalling data link or bus **300** architecture may be used for various platforms. In various embodiments, logic, such as I/O logic, interface logic, or physical layer logic may couple or interface with the lanes or channels.

One such platform includes PCIe.

Another such platform includes Video Electronics Standards Association (VESA) DisplayPort digital display interface.

Still another such platform includes Mobile Industry Processor Interface (MIPI) D-PHY or its successor M-PHY. The D-PHY platform provides a flexible, low-cost, low-power, high-speed serial interface solution for communication interconnection between components inside a mobile device, such as a camera. The M-PHY platform provides a high-bandwidth, low pin count, very good power efficiency serial interface for mobile applications.

A physical layer (PHY) is the lowest layer (layer 1 out of a total of 7 layers of protocols) in an Open Systems Interconnection (OSI) model of computer networking. Layer 1 consists of the basic networking hardware transmission technologies of a network. PHY is the implementation of layer 1 to define the means to transmit raw bits (to establish and maintain data links).

An oscilloscope may probe the data link or bus to monitor the hybrid lane stalling data link or bus architecture. A logic analyzer may also be used to probe the data link or bus to monitor the hybrid lane stalling data link or bus architecture.

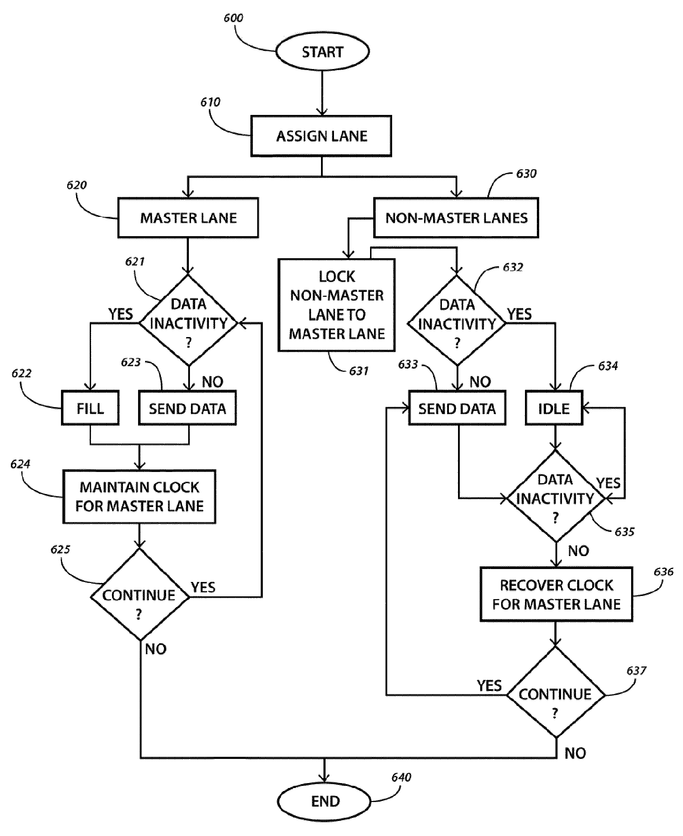

An embodiment of a method of hybrid lane stalling is shown in FIG. **6** from start in block **600** to end in block **640.** A master lane is assigned or selected in block **620.** The master lane fills if there is data inactivity as shown in block **622.** The master lane transmits or sends data if there is no data inactivity. The master lane maintains clock as shown in block **624.** The non-master lanes are assigned or selected in block **630.** The non-master lanes are locked to the master lane as shown in block **631.** The non-master lanes stalls or idles if there is data inactivity as shown in block **634.** The non-master lanes transmit or send data if there is no data inactivity as shown in block **633.** The non-master lanes recover clock from the master lane as shown in block **636.**

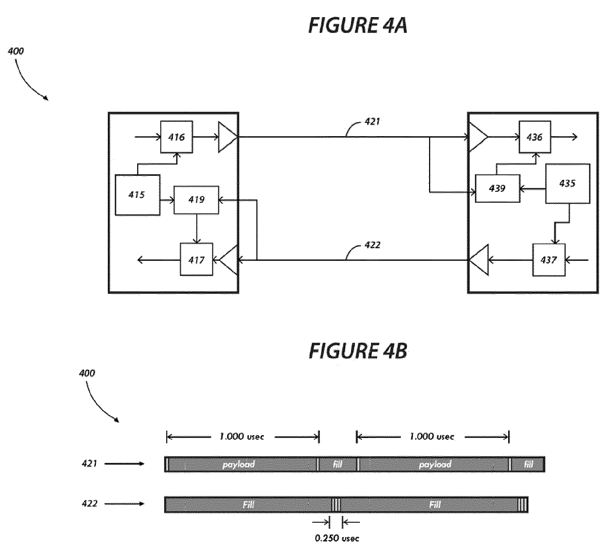

An embodiment of a dual-simplex data link or bus **400** architecture is shown in FIG. **4A****.** Such a data link or bus **400** transmits data on a transmit signal pair and receives a completion response on a receive signal pair. The device (or agent) at either end of the data link or bus may be a requester or a completer. A transaction type may be generated in either direction on the data link or bus on different occasions at different times.

The dual-simplex data link or bus **400,** such as with a data transfer rate of 2.5 gigabits per second (Gbps), may be asymmetrical in data load (or bandwidth). As shown in FIG. **4B****,** a forward channel, such as a first channel **421,** may transmit a large burst of data (payload) **430,** such as with a duration of 1.000 microsecond (usec). The large bursts of data (payload) **430** are separated, as needed, by small bursts of fill characters **415.**

A reverse channel, such as a second channel **422,** may transmit small bursts of data, such as mostly acknowledgement (ACK) **435** packets, such as with a duration of 0.050 usec.

The dual-simplex data link or bus **400** has a first device at a first end and a second device at a second end. The first device and the second device are located at opposite ends of the dual-simplex data link or bus **400.**

In an embodiment, for the first device at the first end of the data link or bus **400,** a first channel **421** may be a forward channel to transmit data **430** while a second channel **422** may be a reverse channel to receive ACK **435.**

Correspondingly, for the second device at the second end of the data link or bus **400,** the second channel **422** may be a forward channel to transmit ACK **435** while the first channel **421** may be a reverse channel to receive data **430.**

Asynchronous systems do not exchange or share timing information. Synchronous systems are well-matched since they use timing information that may be derived from a common or shared clock. Plesiochronous systems use signals from distinct or separate clocks that may not be precisely matched. In an embodiment, the mismatch may be small. In another embodiment, the mismatch may remain constant over time. In still another embodiment, the mismatch may drift over time.

In an embodiment, a synchronization process may be used to wake a plesiochronous input/output (I/O) or interface data link or bus **400** from a sleep state. The receiver locks onto a training bit stream to recover the clock **419.** However, if the bus **400** only has a small burst of data, such as ACK, **435** to transmit, the training time may be longer than the data transmit time. If a spacing time between consecutive bursts of data, such as ACK, **435** is shorter than the training time, then the bus **400** cannot hibernate in the spacing time between the consecutive bursts of data, such as ACK, **435.**

If the training time, or synchronization time, to wake the reverse channel **422** from sleep, such as 6.000 usec, is greater than the data, such as ACK, spacing time, such as 1.000 usec, then the reverse channel **422** cannot stall (or idle or sleep) in the data, such as ACK, spacing time between the ACK **435** packets. In such a situation, the reverse channel **422** transmits large bursts of FILL characters **415** to stay active even though useful data are not being sent. However, transmitting continuously raises power consumption. Furthermore, if the FILL characters are not well randomized, EMI may become an issue.

Data link or bus training includes a protocol that may be performed by two devices (agents) to establish configuration parameters for the data link or bus. An ordered data set may be sent and may be repeated. After each agent recognizes the data set from the other side, they proceed with physical layer link negotiation. A successful negotiation is acknowledged or confirmed by both agents with another data set. Further information is exchanged. Status of devices may be periodically updated.

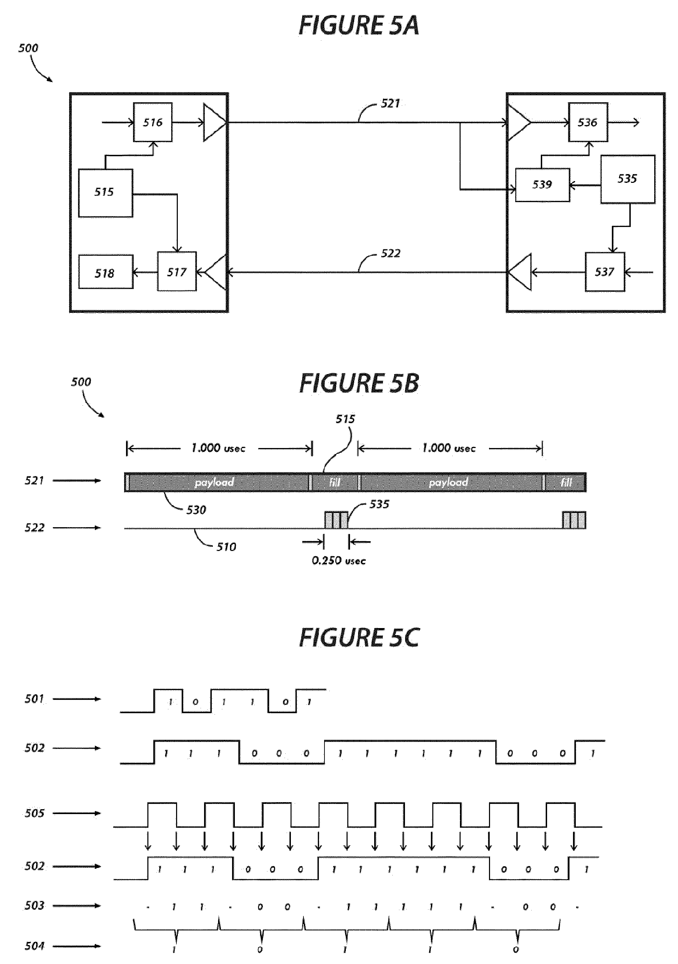

In some embodiments, the plesiochronous data may be received without clock recovery. An embodiment of apparatus, method, system with no-lock (NL) data link or bus **500** architecture is shown in FIG. **5****.** The no-lock bus **500** architecture is used to transmit data and receive data without using a high-speed clock to synchronize a data latch **517** to an incoming data stream.

Multiple bit redundancy may be used to increase robustness of a data link to a large (measured in parts per million or ppm) clock offset. In various embodiments, the redundancy may include 3 bits, 4 bits, 5 bits, or even more bits.

In an embodiment, a 3x-bit redundancy may be used. Then, the reverse channel ACK **535** will have 3x duration **502** due to the redundancy. The receiver uses an unsynchronized receiving high-speed clock **515** to sample the no-lock incoming bit stream. The receiver may use 3:1 voting **518** (without synchronicity) to determine the correct logic state. Thus, the original data may be recovered correctly even for a 'worst case' alignment of clock **505** and data **502** in which a clock edge coincides with a data edge. A SYNC (which may be long) is not used because the receiver does not need to lock to ACK **535.** Consequently, the reverse channel **522** may stall **510** for a long interval, such as 1.000 usec. For example, the reverse channel **522** may stall **510** for greater than 80% of the time, thus reducing both the power consumption and the EMI.

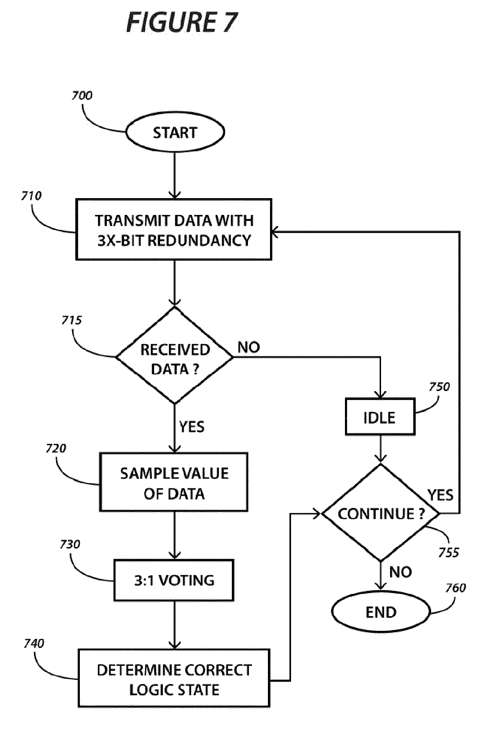

An embodiment of a method of no-lock data transmitting (such as by a second device) and receiving (such as by a first device), such as point-to-point, is shown in FIG. 7 from start in block **700** to end in block **760.** Data, such as acknowledgement (ACK), may be transmitted or sent (such as from a second device) with multiple, such as 3x-bit, redundancy (such as to a first device) as shown in block **710.** The data may have 3x duration due to the 3x-bit redundancy.

The data may be received (such as in a second or reverse channel by the first device) with the multiple, such as 3x-bit redundancy (such as from the second device) as shown in block **715.** The value of the data may be sampled (such as by the first device) as shown in block **720.** Voting, such as 3:1, may be performed (such as by the first device) as shown in block **730.** A correct logic state may be determined (such as by the first device) as shown in block **740.** The (second or reverse channel of the) first device may stall or idle when no data are to be received as shown in block **750.**

Both EMI and RFI decrease proportionally to a percentage of time that the lane or lanes are quiet. A duty cycle is a ratio of on time to total (on and off) time. For example, if a 1-lane bus uses an embodiment of no-lock bus **500** architecture with a 20% duty cycle (ie., stalled or turned off for 80% of the time), the interference decreases by about 7dB (relative to a 100% duty cycle).

In some embodiments, the no-lock data link or bus **500** architecture may be used for platforms that include data links or buses with one or more lanes or channels in each direction that may be quieted. In various embodiments, logic, such as I/O logic, interface logic, or physical layer logic may couple or interface with the lanes or channels.

One such platform includes PCIe.

Another such platform includes universal serial bus (USB). The USB was designed to standardize a connection between personal computers and computer peripherals both to communicate and to supply electric power.

Still another such platform includes Mobile Industry Processor Interface (MIPI) M-PHY. The M-PHY platform provides a high-bandwidth, low pin count, very-good power efficiency serial interface for mobile applications.

The physical layer (PHY) is the lowest layer (layer 1 out of a total of 7 layers of protocols) in an Open Systems Interconnection (OSI) model of computer networking. The layer 1 consists of the basic networking hardware transmission technologies of a network. The PHY is the implementation of the layer 1 to define the means to transmit raw bits (to establish and maintain data links).

An oscilloscope may probe the data link or bus to monitor the no-lock data link or bus architecture. A logic analyzer may also be used to probe the data link or bus to monitor the no-lock data link or bus architecture.

While many embodiments have been described above, those skilled in the art will appreciate numerous modifications and variations therefrom. It is intended that the appended claims cover all such modifications and variations.

A design may go through various stages, from creation to simulation to fabrication. Data representing a design may represent the design in a number of manners. First, as is useful in simulations, the hardware may be represented using a hardware description language or another functional description language. Additionally, a circuit level model with logic and/or transistor gates may be produced at some stages of the design process. Furthermore, most designs, at some stage, reach a level of data representing the physical placement of various devices in the hardware model. In the case where conventional semiconductor fabrication techniques are used, the data representing the hardware model may be the data specifying the presence or absence of various features on different mask layers for masks used to produce the integrated circuit. In any representation of the design, the data may be stored in any form of a machine readable medium. A memory or a magnetic or optical storage such as a disc may be the machine readable medium to store information transmitted via optical or electrical wave modulated or otherwise generated to transmit such information. When an electrical carrier wave indicating or carrying the code or design is transmitted, to the extent that copying, buffering, or re-transmission of the electrical signal is performed, a new copy is made. Thus, a communication provider or a network provider may store on a tangible, machine-readable medium, at least temporarily, an article, such as information encoded into a carrier wave, embodying techniques of embodiments of the present invention.

A module as used herein refers to any combination of hardware, software, and/or firmware. As an example, a module includes hardware, such as a micro-controller, associated with a non-transitory medium to store code adapted to be executed by the micro-controller. Therefore, reference to a module, in one embodiment, refers to the hardware, which is specifically configured to recognize and/or execute the code to be held on a non-transitory medium. Furthermore, in another embodiment, use of a module refers to the non-transitory medium including the code, which is specifically adapted to be executed by the microcontroller to perform predetermined operations. And as can be inferred, in yet another embodiment, the term module (in this example) may refer to the combination of the microcontroller and the non-transitory medium. Often module boundaries that are illustrated as separate commonly vary and potentially overlap. For example, a first and a second module may share hardware, software, firmware, or a combination thereof, while potentially retaining some independent hardware, software, or firmware. In one embodiment, use of the term logic includes hardware, such as transistors, registers, or other hardware, such as programmable logic devices.

Use of the phrase 'to' or 'configured to,' in one embodiment, refers to arranging, putting together, manufacturing, offering to sell, importing and/or designing an apparatus, hardware, logic, or element to perform a designated or determined task. In this example, an apparatus or element thereof that is not operating is still 'configured to' perform a designated task if it is designed, coupled, and/or interconnected to perform said designated task. As a purely illustrative example, a logic gate may provide a 0 or a 1 during operation. But a logic gate 'configured to' provide an enable signal to a clock does not include every potential logic gate that may provide a 1 or 0. Instead, the logic gate is one coupled in some manner that during operation the 1 or 0 output is to enable the clock. Note once again that use of the term 'configured to' does not require operation, but instead focus on the latent state of an apparatus, hardware, and/or element, where in the latent state the apparatus, hardware, and/or element is designed to perform a particular task when the apparatus, hardware, and/or element is operating.

Furthermore, use of the phrases 'capable of/to,' and or 'operable to,' in one embodiment, refers to some apparatus, logic, hardware, and/or element designed in such a way to enable use of the apparatus, logic, hardware, and/or element in a specified manner. Note as above that use of to, capable to, or operable to, in one embodiment, refers to the latent state of an apparatus, logic, hardware, and/or element, where the apparatus, logic, hardware, and/or element is not operating but is designed in such a manner to enable use of an apparatus in a specified manner.

A value, as used herein, includes any known representation of a number, a state, a logical state, or a binary logical state. Often, the use of logic levels, logic values, or logical values is also referred to as 1's and 0's, which simply represents binary logic states. For example, a 1 refers to a high logic level and 0 refers to a low logic level. In one embodiment, a storage cell, such as a transistor or flash cell, may be capable of holding a single logical value or multiple logical values. However, other representations of values in computer systems have been used. For example the decimal number ten may also be represented as a binary value of 1010 and a hexadecimal letter A. Therefore, a value includes any representation of information capable of being held in a computer system.

Moreover, states may be represented by values or portions of values. As an example, a first value, such as a logical one, may represent a default or initial state, while a second value, such as a logical zero, may represent a non-default state. In addition, the terms reset and set, in one embodiment, refer to a default and an updated value or state, respectively. For example, a default value potentially includes a high logical value, i.e. reset, while an updated value potentially includes a low logical value, i.e. set. Note that any combination of values may be utilized to represent any number of states.

The embodiments of methods, hardware, software, firmware, or code set forth above may be implemented via instructions or code stored on a machine-accessible, machine readable, computer accessible, or computer readable medium which are executable by a processing element. A non-transitory machine-accessible/readable medium includes any mechanism that provides (i.e., stores and/or transmits) information in a form readable by a machine, such as a computer or electronic system. For example, a non-transitory machine-accessible medium includes random-access memory (RAM), such as static RAM (SRAM) or dynamic RAM (DRAM); ROM; magnetic or optical storage medium; flash memory devices; electrical storage devices; optical storage devices; acoustical storage devices; other form of storage devices for holding information received from transitory (propagated) signals (e.g., carrier waves, infrared signals, digital signals); etc, which are to be distinguished from the non-transitory mediums that may receive information there from.

Instructions used to program logic to perform embodiments of the invention may be stored within a memory in the system, such as DRAM, cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magnetooptical disks, Read-Only Memory (ROMs), Random Access Memory (RAM), Erasable

Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer).

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In the foregoing specification, a detailed description has been given with reference to specific exemplary embodiments. It will, however, be evident that various modifications and changes may be made thereto without departing from the broader scope of the invention as set forth in the appended claims. The specification and drawings are, accordingly, to be regarded in an illustrative sense rather than a restrictive sense. Furthermore, the foregoing use of embodiment and other exemplarily language does not necessarily refer to the same embodiment or the same example, but may refer to different and distinct embodiments, as well as potentially the same embodiment.

The following examples pertain to further embodiments. Specifics in the examples may be used anywhere in one or more embodiments. For instance, all optional features of the apparatus or system described herein may also be implemented with respect to the method or process described herein.

Example 1 is an apparatus comprising: a link, the link comprising a plurality of lanes, the lanes comprising: a master lane, configured to, when no data needs to be sent, fill the master lane to keep a data sink active and to synchronize to a data source, and a first non-master lane configured to be locked in synchronization with the master lane by a data-rate phase-locked loop, PLL, arranged to lock the clock recovery for all non-master lanes to the master lane, the first non-master lane further being configured, when no data needs to be sent, to stall during a period of inactivity; and interface logic to interface with the link.

Example 2 is the apparatus of example 1 further comprising: other non-master lanes that
are locked to the master lane, the other non-master lanes to turn off completely during the idle time.

Example 3 is the apparatus of example 1, the master lane is unidirectional.

Example 4 is the apparatus of example 1, the first non-master lane is unidirectional.

Example 5 is the apparatus of example 1, the first non-master lane need not to wake and synchronize.

Example 6 is the apparatus of example 2 further comprising a D flip-flop for each non-master lane.

Example 7 is the apparatus of example 2 further comprising one or more delay-locked loops, the one or more delay-locked loops to adjust a static phase alignment for one or more non-master lanes.

Example 8 is the apparatus of example 2 further comprising one or more delay lines, the one or more delay lines to adjust a static phase alignment for one or more non-master lanes.

Example 9 is the apparatus of example 2 further comprising one or more phase interpolators, the one or more phase interpolators to adjust a static phase alignment for one or more non-master lanes.

Example 10 is an apparatus comprising: a link, the link comprising a plurality of lanes, the lanes comprising: a master lane, configured to, when no data needs to be sent, fill the master lane to keep a data sink active and to synchronize to a data source, and a first non-master lane configured to be locked in synchronization with the master lane by a data-rate phase-locked loop, PLL, arranged to lock the clock recovery for all non-master lanes to the master lane, the first non-master lane further being configured, when no data needs to be sent, to stall during a period of inactivity; and physical layer logic to interface with the link.

Example 11 is the apparatus of example 10 further comprising: other non-master lanes that are locked to the master lane, the other non-master lanes to turn off completely during the idle time.

Example 12 is the apparatus of example 10, the master lane is unidirectional.

Example 13 is the apparatus of example 10, the first non-master lane is unidirectional.

Example 14 is the apparatus of example 10, the first non-master lane need not to wake and synchronize.

Example 15 is the apparatus of example 11 further comprising a D flip-flop for each non-master lane.

Example 16 is the apparatus of example 11 further comprising one or more delay-locked
loops, the one or more delay-locked loops to adjust a static phase alignment for one or more non-master lanes.

Example 17 is the apparatus of example 11 further comprising one or more delay lines, the one or more delay lines to adjust a static phase alignment for one or more non-master lanes.

Example 18 is the apparatus of example 11 further comprising one or more phase interpolators, the one or more phase interpolators to adjust a static phase alignment for one or more non-master lanes.

Example 19 is a computer system comprising: an apparatus, the apparatus comprising: a link, the link comprising a plurality of lanes, the lanes comprising: a master lane configured to, when no data needs to be sent, fill the master lane to keep a data sink active and to synchronize to a data source, and a first non-master lane configured to be locked in synchronization with the master lane by a data-rate phase-locked loop, PLL, arranged to lock the clock recovery for all non-master lanes to the master lane, the first non-master lane further being configured, when no data needs to be sent, to stall during a period of inactivity; and physical layer logic to interface with the link.

Example 20 is the computer system of example 19 further comprising: other non-master lanes, the other non-master lanes turning off completely during an idle time, the other non-master lanes need not to wake and synchronize.

Example 21 is the computer system of example 19, the master lane is unidirectional.

Example 22 is the computer system of example 20 further comprising a D flip-flop for each non-master lane.

Example 23 is the computer system of example 20 further comprising one or more delay-locked loops for static phase alignment of one or more non-master lanes.

Example 24 is the computer system of example 20 further comprising one or more delay lines for static phase alignment of one or more non-master lanes.

Example 25 is the computer system of example 20 further comprising one or more phase interpolators for static phase alignment of one or more non-master lanes

Example 26 is a method comprising: to interface with a plurality of lanes of a link, the lanes comprising: a master lane and one or more non-master lanes, to stall the non-master lanes during a period of inactivity, to maintain active data synchronization of the master lane during the period of inactivity, to wake the non-master lanes, without performing a data synchronization of the non-master lanes based on data synchronization of the master lane, in response to an activity indicator that is to indicate data are to be transmitted on the non-master lanes.

Example 27 is the method of example 26 further comprising: to adjust a delay for each non-master lane with a D flip-flop.

Example 28 is the method of example 26 further comprising: to adjust a static phase alignment for one or more non-master lanes with one or more delay-locked loops.

Example 29 is the method of example 26 further comprising: to adjust a static phase alignment for one or more non-master lanes with one or more delay lines.

Example 30 is the method of example 26 further comprising: to adjust a static phase alignment for one or more non-master lanes with one or more phase interpolators.

## Claims

1. An apparatus comprising:
a link (300), the link comprising a plurality of lanes, the lanes are unidirectional, the lanes comprising:
a master lane (301) configured to, when no data needs to be sent, fill the master lane to keep a data sink active and to synchronize to a data source, and
non-master lanes (302, 303, 304) configured to be locked in synchronization with the master lane (301) by a data-rate phase-locked loop, PLL, (342) arranged to lock the clock recovery for all non-master lanes to the master lane,
non-master lanes further being configured, when no data needs to be sent, to stall during a period of inactivity; and
physical layer logic to interface with the link.

2. The apparatus of claim 1 further comprising a D flip-flop for each non-master lane (302, 303, 304).

3. The apparatus of claim 1 further comprising one or more delay-locked loops, the one or more delay-locked loops to adjust a static phase alignment for one or more non-master lanes (302, 303, 304).

4. The apparatus of claim 1 further comprising one or more delay lines, the one or more delay lines to adjust a static phase alignment for one or more non-master lanes (302, 303, 304).

5. The apparatus of claim 1 further comprising one or more phase interpolators, the one or more phase interpolators to adjust a static phase alignment for one or more non-master lanes (302, 303, 304).

6. A computer system comprising an apparatus as claimed in any of claims 1 to 5.

7. A method comprising:
to interface with a plurality of lanes of a link, the lanes comprising: a master lane (301),
configured to, when no data needs to be sent, fill the master lane, and one or more non-master lanes (302, 303, 304),
to stall the non-master lanes during a period of inactivity,
to maintain active data synchronization of the master lane during the period of inactivity, to wake the non-master lanes, without performing a data synchronization of the non-master lanes based on data synchronization of the master lane, in response to an activity indicator that is to indicate data are to be transmitted on the non-master lanes.

8. The method of claim 7 further comprising: to adjust a delay for each non-master lane with a D flip-flop.

9. The method of claim 7 further comprising: to adjust a static phase alignment for one or more non-master lanes (302, 303, 304) with one or more delay-locked loops.

10. The method of claim 7 further comprising: to adjust a static phase alignment for one or more non-master lanes (302, 303, 304) with one or more delay lines.

11. The method of claim 7 further comprising: to adjust a static phase alignment for one or more non-master lanes (302, 303, 304) with one or more phase interpolators.

## Patentansprüche

1. Vorrichtung, die Folgendes umfasst:
eine Verbindung (300), wobei die Verbindung mehrere Spuren umfasst, wobei die Spuren unidirektional sind und Folgendes umfassen:
eine Master-Spur (301), die dazu konfiguriert ist, die Master-Spur zu besetzen, wenn keine Daten gesendet werden müssen, damit eine Datensenke aktiv gehalten wird, und zu einer Datenquelle zu synchronisieren, und
Nicht-Master-Spuren (302, 303, 304), die dazu konfiguriert sind, in Synchronisation mit der Master-Spur (301) durch einen Datenraten-Phasenregelkreis, PLL, (342), der dazu eingerichtet ist, die Taktwiedergewinnung für alle Nicht-Master-Spuren mit der Master-Spur zu verriegeln, verriegelt zu werden,
Nicht-Master-Spuren, die ferner dazu konfiguriert sind, während einer Inaktivitätsphase anzuhalten, wenn keine Daten gesendet werden müssen, und
Bitübertragungsschichtlogik zum Anschalten an die Verbindung.

2. Vorrichtung nach Anspruch 1, die ferner einen D-Flipflop für jede Nicht-Master-Spur (302, 303, 304) umfasst.

3. Vorrichtung nach Anspruch 1, die ferner einen oder mehrere Verzögerungsregelkreise umfasst, wobei der eine oder die mehreren Verzögerungsregelkreise eine statische Phasenausrichtung für eine oder mehrere Nicht-Master-Spuren (302, 303, 304) einstellen soll oder sollen.

4. Vorrichtung nach Anspruch 1, die ferner eine oder mehrere Verzögerungsleitungen umfasst, wobei die eine oder die mehreren Verzögerungsleitungen eine statische Phasenausrichtung für eine oder mehrere Nicht-Master-Spuren (302, 303, 304) einstellen soll oder sollen.

5. Vorrichtung nach Anspruch 1, die ferner einen oder mehrere Phaseninterpolatoren umfasst, wobei der eine oder die mehreren Phaseninterpolatoren eine statische Phasenausrichtung für eine oder mehrere Nicht-Master-Spuren (302, 303, 304) einstellen soll oder sollen.

6. Computersystem, das eine Vorrichtung nach einem der Ansprüche 1 bis 5 umfasst.

7. Verfahren, das Folgendes umfasst:
Anschalten an mehrere Spuren einer Verbindung, wobei die Spuren Folgendes umfassen: eine Master-Spur (301), die dazu konfiguriert ist, die Master-Spur zu besetzen, wenn keine Daten gesendet werden müssen, und eine oder mehrere Nicht-Master-Spuren (302, 303, 304),
Anhalten der Nicht-Master-Spuren während einer Inaktivitätsphase,
Beibehalten aktiver Datensynchronisierung der Master-Spur während der Inaktivitätsphase
Aufwecken der Nicht-Master-Spuren, ohne eine Datensynchronisierung der Nicht-Master-Spuren basierend auf Datensynchronisierung der Master-Spur auszuführen, als Reaktion auf eine Aktivitätsanzeige zum Anzeigen, dass Daten auf den Nicht-Master-Spuren übertragen werden sollen.

8. Verfahren nach Anspruch 7, das ferner Einstellen einer Verzögerung für jede Nicht-Master-Spur mit einem D-Flipflop umfasst.

9. Verfahren nach Anspruch 7, das ferner Einstellen einer statischen Phasenausrichtung für eine oder mehrere Nicht-Master-Spuren (302, 303, 304) mit einem oder mehreren Verzögerungsregelkreisen umfasst.

10. Verfahren nach Anspruch 7, das ferner Einstellen einer statischen Phasenausrichtung für eine oder mehrere Nicht-Master-Spuren (302, 303, 304) mit einer oder mehreren Verzögerungsleitungen umfasst.

11. Verfahren nach Anspruch 7, das ferner Einstellen einer statischen Phasenausrichtung für eine oder mehrere Nicht-Master-Spuren (302, 303, 304) mit einem oder mehreren Phaseninterpolatoren umfasst.

## Revendications

1. Appareil comprenant :
un lien (300), le lien comprenant une pluralité de voies, les voies sont unidirectionnelles, les voies comprenant :
une voie maîtresse (301) configurée pour, lorsqu'aucune donnée ne doit être envoyée, remplir la voie maîtresse pour conserver collecteur de données actif et pour se synchroniser à une source de données, et
des voies non-maîtresses (302, 303, 304) configurées pour être verrouillées en synchronisation avec la voie maîtresse (301) par une boucle à verrouillage de phase de débit de données, PLL, (342) arrangée pour verrouiller la récupération d'horloge de toutes les voies non maîtresses sur la voie maîtresse,
les voies non-maîtresses étant en outre configurées, lorsqu'aucune donnée ne doit être envoyée, pour décrocher au cours d'une période d'inactivité ; et
une logique de couche physique pour établir l'interface avec la liaison.

2. Appareil selon la revendication 1, comprenant en outre une bascule D pour chaque voie non-maîtresse (302, 303, 304).

3. Appareil selon la revendication 1, comprenant en outre une ou plusieurs boucles à verrouillage de retard, les une ou plusieurs boucles à verrouillage de retard étant destinées à ajuster un alignement de phase statique pour une ou plusieurs voies non-maîtresses (302, 303, 304).

4. Appareil selon la revendication 1, comprenant en outre une ou plusieurs lignes à retard, les une ou plusieurs lignes à retard étant destinées à ajuster un alignement de phase statique pour une ou plusieurs voies non-maîtresses (302, 303, 304).

5. Appareil selon la revendication 1, comprenant en outre un ou plusieurs interpolateurs de phase, les un ou plusieurs interpolateurs de phase étant destinés à ajuster un alignement de phase statique pour une ou plusieurs voies non-maîtresses (302, 303, 304).

6. Système informatique comprenant un appareil tel que revendiqué dans l'une quelconque des revendications 1 à 5.

7. Procédé comprenant les étapes suivantes :
établir l'interface avec une pluralité de voies d'une liaison, les voies comprenant : une voie maîtresse (301), configurée, lorsqu'aucune donnée ne doit être envoyée, pour remplir la voie maîtresse et une ou plusieurs voies non-maîtresses (302, 303, 304),
pour décrocher les voies non-maîtresses au cours d'une période d'inactivité,
pour maintenir active la synchronisation de données de la voie maîtresse au cours de la période d'inactivité,
pour mettre en activité les voies non-maîtresses, sans effectuer de synchronisation de données des voies non-maîtresses sur la base d'une synchronisation de données de la voie maîtresse, en réponse à un indicateur d'activité qui sert à indiquer que des données doivent être transmises sur les voies non-maîtresses.

8. Procédé selon la revendication 7, comprenant en outre l'étape suivante : ajuster un retard pour chaque voie non-maîtresse avec une bascule D.

9. Procédé selon la revendication 7, comprenant en outre l'étape suivante : ajuster un alignement de phase statique pour une ou plusieurs voies non-maîtresses (302, 303, 304) avec une ou plusieurs boucles à verrouillage de retard.

10. Procédé selon la revendication 7, comprenant en outre l'étape suivante : ajuster un alignement de phase statique pour une ou plusieurs voies non-maîtresses (302, 303, 304) avec une ou plusieurs lignes à retard.

11. Procédé selon la revendication 7, comprenant en outre l'étape suivante : ajuster un alignement de phase statique pour une ou plusieurs voies non-maîtresses (302, 303, 304) avec un ou plusieurs interpolateurs de phase.
